# FASCICULE DE BREVET EUROPEEN

(11) **EP 3 469 229 B1**
(45) Date de publication et mention de la délivrance du brevet: **16.09.2020**
(21) Numéro de dépôt: 17742794.5
(22) Date de dépôt: 06.06.2017
(51) Int. Cl.: F16D 13/68, F16F 15/14, F16F 15/12

(54) **DISQUE DE FRICTION AVEC DISPOSITIF D'AMORTISSEMENT PENDULAIRE**
REIBSCHEIBE MIT PENDELARTIGER DÄMPFUNGSVORRICHTUNG
FRICTION DISK WITH PENDULAR DAMPING DEVICE

(30) Priorité: 08.06.2016 FR 1655238
(43) Date de publication de la demande: 17.04.2019
(73) Titulaire: Valeo Embrayages, 80009 Amiens Cedex 2 (FR)
(72) Inventeur: RUMEAU, Eric, 80009 Amiens (FR)
(86) Numéro de dépôt international: PCT/FR2017/051428
(87) Numéro de publication internationale: WO 2017/212167

(56) Documents cités:
- WO-A1-2013/034125
- DE-A1-102012 209 084
- DE-A1-102014 108 146
- US-A- 6 068 098

## Description

La présente invention concerne un disque de friction pour embrayage avec dispositif d'amortissement pendulaire.

Un tel dispositif d'amortissement pendulaire met classiquement en œuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires du corps pendulaire.

Lors du démarrage ou lors de l'arrêt du moteur thermique du véhicule, de faibles régimes peuvent entraîner une désynchronisation des corps pendulaires par rapport au support, de sorte que ces corps pendulaires peuvent chuter radialement et venir frapper contre le support. Un tel choc peut occasionner des vibrations du support et/ou des bruits non souhaitables. De tels bruits et/ou de telles vibrations non souhaitables peuvent aussi se produire lors de chocs entre corps pendulaire et support à l'issue du déplacement de ce corps pendulaire pour filtrer une oscillation de torsion. La demande WO2013/034125 divulgue un disque de friction pour embrayage selon le préambule de la revendication 1. Le document US 6,068,098 A1 divulgue un ensemble d'amortisseurs dynamiques.

Il existe un besoin pour réduire, notamment supprimer, les inconvénients ci-dessus se produisant notamment lors de chute(s) radiale(s) d'un corps pendulaire sur le support d'un dispositif d'amortissement pendulaire faisant partie d'un disque de friction pour embrayage.

L'invention a pour objet de répondre à ce besoin et elle y parvient, selon l'un de ses aspects, à l'aide d'un disque de friction pour embrayage définissant un axe de rotation et comprenant :
- un composant mobile en rotation autour de l'axe,
- un dispositif d'amortissement pendulaire, comprenant un support et au moins un corps pendulaire mobile par rapport à ce support, et
- un organe d'amortissement des vibrations axiales du support du dispositif d'amortissement pendulaire, venant en appui :
   - d'une part au moins indirectement contre le support du dispositif d'amortissement pendulaire, et
   - d'autre part contre le composant mobile en rotation autour de l'axe.

Selon l'invention, l'organe d'amortissement des vibrations axiales du support est interposé, sans pièce(s) intermédiaire(s) ou à l'aide de pièce(s) intermédiaire(s), entre un composant du disque de friction et le support du dispositif d'amortissement pendulaire.

Le disque de friction peut comprendre un support de garnitures de friction et un moyeu de sortie.

Le composant en question peut être un composant solidaire du support de garnitures du disque de friction ou un composant solidaire du moyeu de sortie du disque de friction. Le composant du disque de friction peut, dans certains cas, être le support de garnitures lui-même. Le composant du disque de friction peut, dans certains cas, être le moyeu de sortie lui-même. Dans certains cas, le disque de friction peut comprendre un amortisseur d'oscillations de torsion à ressorts et le composant peut appartenir à l'entrée ou à la sortie de cet amortisseur, le composant étant par exemple une rondelle de guidage ou un flasque formant en tout ou partie l'entrée ou la sortie de cet amortisseur.

L'organe d'amortissement des vibrations axiales exerce ainsi une contrainte axiale sur le support du dispositif d'amortissement pendulaire, de sorte que l'on remédie ainsi aux inconvénients précités tout en occupant de l'espace déjà disponible au sein du disque de friction.

L'action de l'organe d'amortissement des vibrations axiales du support du dispositif d'amortissement pendulaire sur ce support peut générer une surface d'appui sur ce support, et cette surface peut être disposée à une distance de l'axe de rotation du composant supérieure à 0,5 fois la distance entre cet axe de rotation et le centre de gravité du corps pendulaire lorsque ce dernier est au repos.

Le composant mobile en rotation peut être différent d'un composant supportant le dispositif d'amortissement pendulaire. Autrement dit, la liaison du support du dispositif d'amortissement pendulaire au reste du disque de friction ne se fait alors pas via ce composant mobile en rotation.

Des fréquences comprises entre 1000 Hz et 3000 Hz peuvent par exemple être filtrées grâce à la présence de l'organe d'amortissement des vibrations axiales du support du dispositif d'amortissement pendulaire.

On remédie ainsi aux problèmes identifiés ci-dessus se produisant par exemple lors du démarrage ou lors de l'arrêt du moteur thermique du véhicule.

Au sens de la présente demande :
- « axialement » signifie «le long de l'axe de rotation du disque »,
- « radialement » signifie « le long d'un axe appartenant à un plan orthogonal à l'axe de rotation du disque et coupant cet axe de rotation»,
- « angulairement » ou « circonférentiellement » signifie « autour de l'axe de rotation du disque »,
- « orthoradialement » signifie « perpendiculairement à une direction radiale »,
- « solidaire » signifie « rigidement couplé »,
- « entrée » et « sortie » se rapportent au sens de transmission du couple depuis le moteur thermique du véhicule vers les roues de ce véhicule, et
- la position de repos d'un corps pendulaire est celle dans laquelle ce corps pendulaire est centrifugé sans être soumis à des oscillations de torsion provenant des acyclismes du moteur thermique.

L'organe d'amortissement des vibrations axiales est par exemple disposé axialement entre le composant du disque de friction et le support du dispositif d'amortissement pendulaire, de sorte que l'encombrement axial du disque de friction n'est pas augmenté par l'ajout de cette fonction d'amortissement des vibrations axiales du support du dispositif d'amortissement pendulaire.

Le disque de friction peut être dépourvu de moyen d'amortissement des oscillations de torsion autre que le dispositif d'amortissement pendulaire. Dans ce cas, le support de garnitures est solidaire du moyeu de sortie, et le composant précité est à la fois solidaire du support de garnitures et solidaire du moyeu de sortie.

En variante, le disque de friction peut comprendre un amortisseur d'oscillations de torsion à ressorts, le support de garnitures formant l'entrée de cet amortisseur d'oscillations de torsion et le moyeu de sortie formant par exemple la sortie de cet amortisseur d'oscillations de torsion. L'amortisseur d'oscillations de torsion peut comprendre des organes de rappel élastique montés en parallèle, ces organes de rappel élastique étant par exemple formés par des ressorts courbes ou droits.

Lorsqu'un tel amortisseur d'oscillations de torsion à ressorts est présent, et selon un premier exemple de mise en œuvre de l'invention, le support du dispositif d'amortissement pendulaire peut être solidaire du moyeu de sortie, l'organe d'amortissement des vibrations axiales du support venant en appui :
- d'une part au moins indirectement contre le support du dispositif d'amortissement pendulaire, et
- d'autre part contre le composant du disque de friction, ce dernier étant par exemple solidaire du support de garnitures.

Autrement dit, dans ce cas, l'organe d'amortissement des vibrations axiales est interposé entre deux éléments mobiles en rotation l'un par rapport à l'autre contre l'action des organes de rappel élastique de l'amortisseur d'oscillations de torsion à ressorts.

L'entrée de l'amortisseur d'oscillations de torsion à ressorts est par exemple formée par deux rondelles de guidage et l'organe d'amortissement des vibrations axiales du support vient par exemple en appui, directement ou non, contre une de ces rondelles de guidage, notamment la rondelle de guidage sur laquelle est fixé le support de garnitures, par exemple par rivetage. Dans un tel cas, l'organe d'amortissement des vibrations axiales du support peut venir directement en appui contre une rondelle de guidage, et directement ou indirectement en appui contre le support du dispositif d'amortissement pendulaire.

En variante, l'entrée de l'amortisseur d'oscillations de torsion à ressorts peut être formée par un seul flasque, la sortie étant alors formée par deux rondelles de guidage, et l'organe d'amortissement des vibrations axiales du support vient alors en appui, directement ou non, contre ce flasque unique d'entrée. Le support de garnitures est alors fixé, par exemple par rivetage, sur ce flasque unique d'entrée. Dans un tel cas, l'organe d'amortissement des vibrations axiales du support peut venir directement en appui contre le flasque, et directement ou indirectement en appui contre le support du dispositif d'amortissement pendulaire.

Selon ce premier exemple de mise en œuvre, l'organe d'amortissement des vibrations axiales est par exemple une rondelle d'hystérésis générant un frottement lors du déplacement relatif en rotation du support du dispositif d'amortissement pendulaire par rapport au composant du disque de friction qui est solidaire du support de garnitures. On peut ainsi faire jouer à la rondelle d'hystérésis un rôle double : d'une part assurer un frottement maîtrisé entre l'entrée et la sortie de l'amortisseur d'oscillations de torsion à ressorts, et d'autre part amortir les vibrations axiales du support du dispositif d'amortissement pendulaires en cas de choc du ou des corps pendulaires sur le support. On améliore ainsi le fonctionnement du disque de friction sans augmenter le nombre de pièces pour ce faire.

Selon un deuxième exemple de mise en œuvre de l'invention, le support du dispositif d'amortissement pendulaire peut être solidaire du moyeu de sortie, l'organe d'amortissement des vibrations axiales du support du dispositif d'amortissement pendulaire venant en appui :
- d'une part au moins indirectement contre le support du dispositif d'amortissement pendulaire, et
- d'autre part contre le composant du disque de friction, ce dernier étant par exemple solidaire du moyeu de sortie.

Selon ce deuxième exemple de mise en œuvre de l'invention, l'organe d'amortissement des vibrations axiales du support du dispositif d'amortissement pendulaire peut être interposé entre deux éléments qui sont fixes en rotation l'un par rapport à l'autre, notamment fixes en rotation et en translation. Dans ce cas, cet organe d'amortissement des vibrations axiales du support ne fournit pas de frottement entre l'entrée et la sortie de l'amortisseur d'oscillations de torsion à ressorts autre qu'un frottement statique. Toujours selon ce deuxième exemple de mise en œuvre de l'invention, l'organe d'amortissement des vibrations axiales du support du dispositif d'amortissement pendulaire peut s'étendre axialement de part et d'autre d'un élément de l'entrée, notamment une rondelle de guidage ou un flasque, de l'amortisseur d'oscillations de torsion à ressorts, passant par exemple à travers des ouvertures ménagées dans cet élément.

Selon ce deuxième exemple de mise en œuvre, la sortie de l'amortisseur d'oscillations de torsion à ressorts peut être formée par un unique flasque, auquel cas le support du dispositif d'amortissement pendulaire peut être solidaire de cet unique flasque. Dans un tel cas, l'organe d'amortissement des vibrations axiales du support peut venir directement en appui contre le flasque, et directement ou indirectement en appui contre le support du dispositif d'amortissement pendulaire.

En variante, selon ce deuxième exemple de mise en œuvre, la sortie de l'amortisseur d'oscillations de torsion à ressorts peut être formée par deux rondelles de guidage, et le support du dispositif d'amortissement pendulaire est alors solidaire de chacune de ces rondelles de guidage. Dans un tel cas, l'organe d'amortissement des vibrations axiales du support peut venir directement en appui contre une rondelle de guidage, et directement ou indirectement en appui contre le support du dispositif d'amortissement pendulaire.

Selon l'un ou l'autre des exemples de mise en œuvre ci-dessus, le disque de friction peut ne comprendre qu'un unique amortisseur d'oscillations de torsion à ressorts.

En variante, selon l'un ou l'autre des exemples de mise en œuvre de l'invention, le disque de friction peut comprendre :
- l'amortisseur d'oscillations de torsion à ressorts précité, étant alors appelé « amortisseur principal », et
- un amortisseur d'oscillations de torsion à ressorts additionnel, appelé « pré-amortisseur », et disposé en aval de l'amortisseur principal dans le chemin du couple transmis du vilebrequin du véhicule vers les roues de ce dernier.

Selon cette variante le support du dispositif d'amortissement pendulaire peut alors être :
- soit solidaire du moyeu de sortie du disque de friction,
- soit solidaire d'un flasque interposé dans le chemin du couple entre l'amortisseur principal et le pré-amortisseur.

Le composant mobile en rotation autour de l'axe contre lequel vient en appui l'organe d'amortissement des vibrations axiales du support du dispositif d'amortissement pendulaire peut alors, dans le cas où le pré-amortisseur est également présent, être :
- solidaire du support de garnitures, ou
- solidaire d'un flasque interposé dans le chemin du couple entre l'amortisseur principal et le pré-amortisseur, ou
- solidaire du moyeu de sortie.

Lorsque le disque de friction comprend un amortisseur principal et un pré-amortisseur, l'organe d'amortissement des vibrations axiales du support peut venir directement en appui contre une rondelle ou flasque appartenant à l'entrée ou à la sortie de cet amortisseur principal, ou à l'entrée ou à la sortie de ce pré-amortisseur.

Selon l'un des exemples de mise en œuvre ci-dessus, l'organe d'amortissement des vibrations axiales du support du dispositif d'amortissement pendulaire peut venir en appui contre le support du dispositif d'amortissement pendulaire via une pièce additionnelle pincée entre cet organe d'amortissement des vibrations axiales et le support. Dans ce cas, l'appui de l'organe d'amortissement des vibrations axiales sur le support du dispositif d'amortissement pendulaire se fait alors indirectement via cette pièce additionnelle.

Selon l'un des exemples de mise en œuvre ci-dessus, l'organe d'amortissement des vibrations axiales du support du dispositif d'amortissement pendulaire peut venir directement en appui contre le composant du disque de friction, ce dernier étant notamment solidaire du support de garnitures ou solidaire d'un flasque interposé dans le chemin du couple entre l'amortisseur principal et le pré-amortisseur, ou solidaire du moyeu de sortie.

Selon le premier exemple de mise en œuvre de l'invention, un mouvement de rotation peut exister entre la pièce additionnelle et l'organe d'amortissement des vibrations axiales du support du dispositif d'amortissement pendulaire tandis que la pièce additionnelle est de préférence fixe par rapport à l'organe d'amortissement des vibrations axiales selon le deuxième exemple de mise en œuvre de l'invention.

Cette pièce additionnelle, lorsqu'elle existe, peut présenter une portion en forme de collerette s'étendant axialement, et disposée radialement sous le ou les corps pendulaires afin de limiter le déplacement radialement vers l'intérieur de ce(s) corps pendulaire(s), par exemple lors d'un arrêt du moteur thermique du véhicule.

La pièce additionnelle peut présenter des bras d'accrochage sur le support du dispositif d'amortissement pendulaire, cet accrochage se faisant notamment par encliquetage.

Lorsque l'organe d'amortissement des vibrations axiales du support du dispositif d'amortissement pendulaire est une rondelle, cette dernière peut présenter :
- une portion radialement extérieure s'étendant radialement entre un bord radialement extérieur, notamment circulaire, et un bord radialement intérieur, notamment circulaire également, et
- une pluralité de pattes prenant naissance sur le bord radialement intérieur de la portion radialement extérieure précitée.

L'organe d'amortissement des vibrations axiales du support peut venir en appui, directement ou non, contre le support du dispositif d'amortissement pendulaire via la portion radialement extérieure de la rondelle et venir via les pattes précitées en appui contre le composant du disque de friction, ce dernier étant notamment un composant solidaire du moyeu de sortie ou un composant solidaire du support de garnitures.

Les pattes peuvent s'étendre de biais dans l'espace axial ménagé entre le support du dispositif d'amortissement pendulaire et le composant du disque de friction, ce dernier étant notamment solidaire du moyeu de sortie ou du support de garnitures.

Ces pattes peuvent être flexibles et elles peuvent présenter des extrémités libres reçues dans des encoches ménagées dans le composant solidaire du moyeu de sortie ou du support de garnitures, afin de solidariser ces pattes à ce composant.

Bien entendu, la configuration inverse de celle qui vient d'être mentionnée est possible, à savoir la réalisation de l'organe d'amortissement des vibrations axiales sous forme d'une rondelle comprenant comme précédemment une portion radialement extérieure et une pluralité de pattes, cette rondelle venant en appui, directement ou non, contre le support du dispositif d'amortissement pendulaire via les pattes précitées et cette rondelle venant en appui via la portion radialement extérieure contre le composant du disque de friction, ce dernier étant notamment un composant solidaire du moyeu de sortie ou un composant solidaire du support de garnitures.

Lorsque la pièce additionnelle ci-dessus est présente, cette dernière peut être réalisée en plastique tandis que l'organe d'amortissement des vibrations axiales du support est réalisé en une matière flexible, notamment en une matière élastiquement déformable. L'organe d'amortissement des vibrations axiales du support est par exemple réalisé en acier ressort.

Dans tout ce qui précède, l'organe d'amortissement des vibrations axiales du support, notamment la rondelle, peut s'étendre axialement entre deux extrémités, et l'une au moins de cette extrémité, notamment la patte précitée, peut présenter une forme recourbée.

Dans tout ce qui précède, le support du dispositif d'amortissement pendulaire peut être axialement disposé entre le support de garnitures et l'extrémité du moyeu de sortie apte à venir en regard d'une boîte de vitesses.

Dans tout ce qui précède, le support du dispositif d'amortissement pendulaire peut être fixé à la fois en rotation et en translation sur le moyeu de sortie.

Dans tout ce qui précède, le dispositif d'amortissement pendulaire peut comprendre une pluralité de corps pendulaires se déplaçant chacun, notamment via un ou deux ou plus organes de roulement, par rapport au support pour filtrer une oscillation de torsion.

Le support du dispositif d'amortissement pendulaire peut être unique et chaque corps pendulaire peut comprendre deux masses pendulaires respectivement disposées axialement d'un côté du support. Ces masses pendulaires peuvent alors être solidarisées entre elles via un ou plusieurs organes de liaison tels que des rivets.

En variante, le dispositif d'amortissement pendulaire comprend deux supports axialement décalés et solidaires, un corps pendulaire étant alors formé par une masse pendulaire unique disposée axialement entre les deux supports, ou un corps pendulaire étant formé par plusieurs masses pendulaires solidarisées entre elles. Toutes ces masses pendulaires d'un même corps pendulaire peuvent alors être disposées axialement entre les deux supports. En variante seule(s) certaine(s) masse(s) pendulaire(s) du corps pendulaire s'étend(ent) axialement entre les deux supports, d'autre(s) masse(s) pendulaire(s) de ce corps pendulaire s'étendant axialement au-delà de l'un ou de l'autre des supports. Dans une telle variante, chaque support du dispositif d'amortissement pendulaire peut être associé à un organe d'amortissement des vibrations axiales de ce support. Dans tout ce qui précède, chaque corps pendulaire peut être uniquement déplacé par rapport au support en translation autour d'un axe fictif parallèle à l'axe de rotation du support.

En variante, chaque corps pendulaire peut être déplacé par rapport au support à la fois :
- en translation autour d'un axe fictif parallèle à l'axe de rotation du support et,
- également en rotation autour du centre de gravité de ladite masse pendulaire, un tel mouvement étant encore appelé « mouvement combiné ».

Le dispositif d'amortissement pendulaire comprend par exemple deux corps pendulaires.

Chaque corps pendulaire est par exemple accordé à l'ordre d'excitation du moteur thermique associé au disque de friction, ce moteur thermique étant par exemple à deux, quatre ou six cylindres.

Le mouvement de chaque corps pendulaire par rapport au support est par exemple guidé par deux organes de roulement, chacun coopérant avec une piste de roulement solidaire du support et avec au moins une piste de roulement solidaire du corps pendulaire. Lorsque deux masses pendulaires sont contenues dans un même corps pendulaire, la piste de roulement solidaire du corps pendulaire peut être unique pour un organe de roulement donné et cette piste de roulement est par exemple définie par un organe de liaison. En variante, lorsque deux masses pendulaires sont contenues dans un même corps pendulaire, un même organe de roulement peut coopérer avec deux pistes de roulement solidaires du corps pendulaire, chacune de ces pistes de roulement étant définie par un bord d'une cavité ménagée dans une masse pendulaire respective.

Dans tout ce qui précède, l'organe d'amortissement des vibrations axiales du support du dispositif d'amortissement pendulaire peut en permanence venir en appui, directement ou via une ou plusieurs pièces additionnelles, d'une part contre le support du dispositif d'amortissement pendulaire et d'autre part contre le composant du disque de friction qui est solidaire du moyeu de sortie ou du support de garnitures. Autrement dit, cet organe d'amortissement des vibrations axiales est différent d'un limiteur de couple interposé entre le support du dispositif d'amortissement pendulaire et ledit composant du disque de friction, un tel limiteur de couple ne venant que sélectivement en appui sur le support d'un dispositif d'amortissement pendulaire et sur ledit composant du disque de friction.

L'invention pourra être mieux comprise à la lecture de la description qui va suivre d'exemples non limitatifs de mise en œuvre de celle-ci et à l'examen du dessin annexé sur lequel :
- la figure 1 représente de façon très schématique un disque de friction selon un premier exemple de mise en œuvre de l'invention,
- la figure 2 est une vue de face à l'état assemblé d'une réalisation plus concrète du disque de friction de la figure 1,
- la figure 3 est une vue en éclaté du disque de la figure 2,
- la figure 4 est une vue en coupe selon IV-IV du disque de la figure 2,
- la figure 5 est un détail de la figure 4,
- la figure 6 représente de façon très schématique un disque de friction selon un deuxième exemple de mise en œuvre de l'invention,
- la figure 7 est une vue de face à l'état assemblé d'une réalisation plus concrète du disque de friction de la figure 6,
- la figure 8 est une vue en éclaté du disque de la figure 7,
- la figure 9 est une vue en coupe selon IX-IX du disque de la figure 7,
- la figure 10 est un détail de la figure 9.

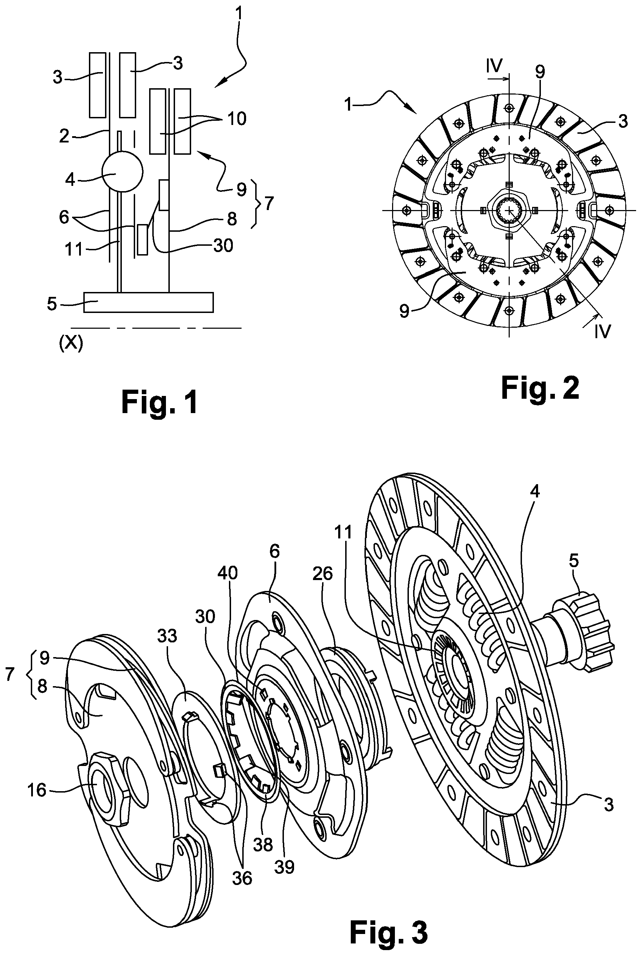

On a représenté sur la figure 1 un disque de friction pour embrayage 1 selon un premier exemple de mise en œuvre de l'invention.

Ce disque de friction 1 est ici destiné à être intégré à un groupe motopropulseur comprenant par exemple un moteur thermique notamment à deux, trois ou quatre cylindres.

Le disque de friction 1 comprend dans l'exemple décrit un support de garnitures 2, portant des garnitures de friction 3. Ce support de garnitures 2 est ici riveté sur une rondelle de guidage 6 qui forme l'entrée d'un amortisseur d'oscillations de torsion à ressorts 4 comprenant dans l'exemple décrit une pluralité de ressorts courbes montés en parallèle.

Une autre rondelle de guidage 6, axialement espacée de la rondelle de guidage portant le support de garnitures 3, est prévue.

Axialement disposé entre les deux rondelles de guidage 6, un flasque de sortie 11 pour l'amortisseur de torsion à ressorts 4 est prévu. Un élément de frottement 26 est encore prévu. Le disque de friction 1 comprend encore un moyeu de sortie 5 qui tourne en rotation autour d'un axe X.

Bien que non représenté sur la figure 1, un pré-amortisseur est présent dans l'exemple considéré. L'entrée de ce pré-amortisseur est solidaire du flasque de sortie 11 et la sortie de ce pré-amortisseur est formée par le moyeu de sortie 5.

On constate également sur la figure 1 que le disque de friction 1 comprend encore un dispositif d'amortissement pendulaire 7. Ce dernier comprend un support 8 qui est ici solidaire, c'est-à-dire fixé en rotation et en translation, du moyeu de sortie 5. Le support 8 est ici positionné sur le moyeu de sortie 5 à proximité de l'extrémité de ce moyeu de sortie 5 qui sera disposée en regard de la boîte de vitesses, une fois le groupe motopropulseur assemblé.

Comme on peut le voir sur les figures 2 à 5, l'arrêt axial du support 8 du dispositif d'amortissement pendulaire 7 sur le moyeu de sortie 5 s'effectue par exemple d'un côté via un épaulement 15 ménagé dans le moyeu de sortie 5, et d'autre part de l'autre côté à l'aide d'une pièce de fermeture 16 qui est amenée contre le support 8.

Le dispositif d'amortissement pendulaire 7 comprend encore dans l'exemple décrit une pluralité de corps pendulaires 9 mobiles par rapport au support 8. Dans l'exemple considéré, deux corps pendulaires 9 sont prévus. On constate par ailleurs que le support 8 est ici réalisé d'un seul tenant, ayant une forme de plaque s'étendant entre deux côtés sensiblement parallèles.

Chaque corps pendulaire 9 comprend dans l'exemple considéré :
- deux masses pendulaires 10, chaque masse pendulaire 10 s'étendant axialement en regard d'un côté du support 8, et
- deux organes de liaison 23 solidarisant les deux masses pendulaires 10.

Plusieurs organes de liaison 23, encore appelés « entretoises », sont dans l'exemple considéré décalés angulairement.

Sur la figure 2, le dispositif d'amortissement pendulaire 7 est au repos, c'est-à-dire qu'il ne filtre pas les oscillations de torsion transmises par le groupe motopropulseur du fait des acyclismes du moteur thermique.

Dans l'exemple décrit, chaque extrémité d'un organe de liaison 23 est soudée sur une masse pendulaire 10, de manière à solidariser ces deux masses pendulaires 10. Dans des variantes, chacune de ces extrémités pourrait être emmanchée en force dans une ouverture ménagée dans une des masses pendulaires 10. Chaque organe de liaison 23 s'étend en partie dans une fenêtre ménagée dans le support 8.

Le dispositif d'amortissement pendulaire 7 comprend encore dans l'exemple considéré des organes de roulement guidant le déplacement des corps pendulaires 9 par rapport au support 8. Les organes de roulement sont par exemple des rouleaux.

Dans l'exemple décrit, le mouvement par rapport au support 8 de chaque corps pendulaire 9 est guidé par deux organes de roulement, chacun d'entre eux coopérant dans l'exemple des figures avec l'un des organes de liaison 23 du corps pendulaire 9.

Chaque organe de roulement coopère ici avec une seule première piste de roulement solidaire du support 8, et avec une seule deuxième piste de roulement solidaire du corps pendulaire 9 pour guider le déplacement de ce corps pendulaire 9.

Dans l'exemple considéré, chaque deuxième piste de roulement est formée par une portion du bord radialement extérieur d'un organe de liaison 23.

Chaque première piste de roulement est définie par une partie du contour d'une fenêtre ménagée dans le support 8.

Chaque première piste de roulement est ainsi disposée radialement en regard d'une deuxième piste de roulement, de sorte qu'une même surface de roulement d'un organe de roulement roule alternativement sur la première piste de roulement et sur la deuxième piste de roulement. La surface de roulement de l'organe de roulement est ici un cylindre de rayon constant.

Selon l'invention, un organe d'amortissement 30 des vibrations axiales du support 8 résultant des chocs pendulaires des corps pendulaires 9 sur ce support 8 est prévu.

Cet organe d'amortissement 30 est ici une rondelle, étant par exemple réalisée en acier ressort.

Selon le premier exemple de mise en œuvre, tel que décrit en référence aux figures 1 à 5, l'organe d'amortissement 30 vient en appui :
- d'une part indirectement contre le support 8 du dispositif d'amortissement pendulaire 7, et
- d'autre part directement contre la rondelle de guidage 6 sur laquelle est rapporté le support 2 de garnitures.

L'appui indirect de cette rondelle 30 sur le support 8 du dispositif d'amortissement pendulaire se fait via une pièce additionnelle 33 qui est axialement pincée entre la rondelle 30 et ce support 8.

La pièce additionnelle 33 présente dans cet exemple une forme de T dans un plan contenant l'axe de rotation X. Cette pièce additionnelle 33 présente ici d'une part une portion s'étendant radialement, parallèlement au support 8 du dispositif d'amortissement pendulaire 7, cette portion ayant une extrémité radialement extérieure formant une collerette 34 s'étendant axialement. La collerette 34 est disposée radialement intérieurement par rapport aux corps pendulaires 9 et peut ainsi former une butée pour le déplacement radial vers l'intérieur des corps pendulaires 9, par exemple en cas d'arrêt du moteur thermique du véhicule.

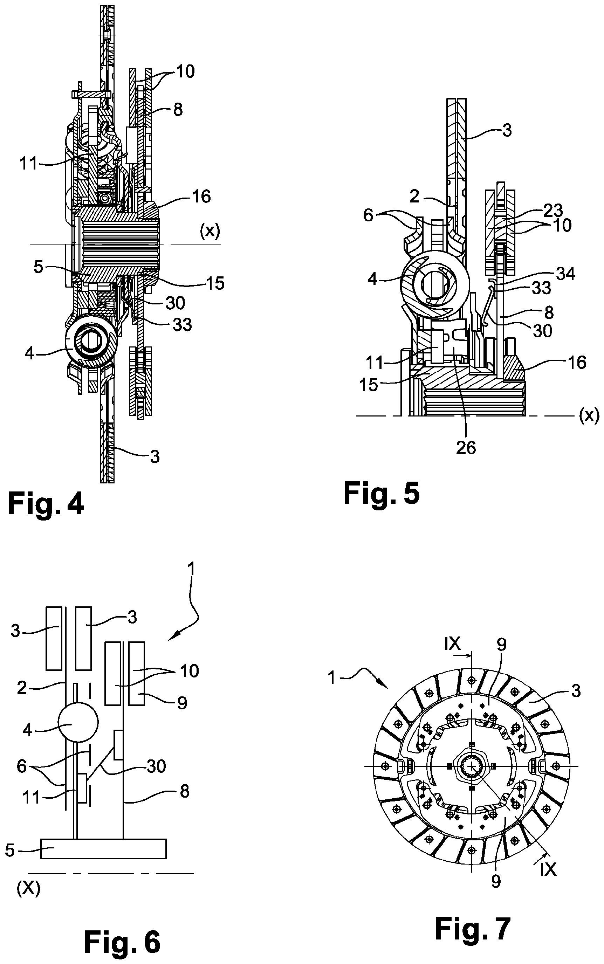

Comme on le voit notamment sur la figure 4, la pièce additionnelle 33 peut encore comprendre plusieurs bras 36 permettant l'accrochage par encliquetage sur le support 8 du dispositif d'amortissement pendulaire 7.

La pièce additionnelle 33 est par exemple réalisée en plastique.

La rondelle 30 permettant l'amortissement des vibrations axiales du support 8 du dispositif d'amortissement pendulaire va maintenant être décrite.

Comme on peut le voir sur la figure 3, cette rondelle 30 peut présenter :
- une portion radialement extérieure 38 s'étendant radialement entre un bord radialement extérieur qui est ici circulaire, et un bord radialement intérieur qui est ici également circulaire, et
- une pluralité de pattes 39, prenant naissance sur le bord radialement intérieur de la portion radialement extérieure 38. Les pattes 39 s'étendent ici de biais dans l'espace axial ménagé entre la rondelle de guidage 6 et le support 8 du dispositif d'amortissement pendulaire 7.

On constate sur les figures que la rondelle 30 vient indirectement en appui par sa portion radialement extérieure 38 contre le support 8 du dispositif d'amortissement pendulaire 7 via la pièce additionnelle 33, et que cette rondelle 30 vient directement en appui via les pattes 39 contre la rondelle de guidage 6 sur laquelle est riveté le support 2 de garnitures.

Cet appui des pattes 39 se fait ici via des encoches 40 ménagées dans la rondelle de guidage 6, chaque encoche 40 recevant ici une patte 39 de manière à immobiliser la rondelle 30 par rapport à la rondelle de guidage 6.

Comme on le voit, la rondelle 30 est interposée et interagit entre deux éléments mobiles en rotation l'un par rapport à l'autre autour de l'axe X, à savoir le support 8 du dispositif d'amortissement pendulaire 7, qui est solidaire du moyeu de sortie 5, et la rondelle de guidage 6 qui est solidaire du support de garnitures 2. La rotation entre ces deux éléments est permise au moins via l'amortisseur d'oscillations de torsion à ressorts 4, et le cas échéant via le pré-amortisseur.

L'effet de la rondelle 30 est ici double.

D'une part, la rondelle 30 exerce ici, via la pièce additionnelle 33, une contrainte axiale sur le support 8 du dispositif d'amortissement pendulaire 7, de sorte que les vibrations axiales de ce support 8 qui résulteraient des chocs des corps pendulaires 9 sur ce dernier sont réduites puisque ce déplacement axial du support est fortement entravé, sinon empêché.

En outre, cette rondelle 30, qui frotte contre le support 8 du dispositif d'amortissement pendulaire 7 et la rondelle de guidage 6 permet d'imposer un hystérésis entre ces deux éléments.

On va maintenant décrire, en référence aux figures 6 à 10 un disque de friction 1 selon un deuxième exemple de mise en œuvre de l'invention.

Ce deuxième exemple, tel que décrit ici, diffère du premier exemple en ce que l'organe d'amortissement 30 des vibrations axiales du support 8 du dispositif d'amortissement pendulaire 7 est ici interposé entre deux éléments qui ne sont pas mobiles en rotation contre l'action d'organes de rappel élastiques de l'amortisseur d'oscillations de torsion à ressorts 4. En présence du pré-amortisseur, ces deux éléments sont mobiles en rotation contre l'action des organes de rappel élastique du pré-amortisseur. En l'absence de pré-amortisseur, ces deux éléments sont fixes en rotation l'un par rapport à l'autre.

Comme on peut le voir sur les figures 6 à 10, l'organe d'amortissement des vibrations axiales 30 du support 8 du dispositif d'amortissement pendulaire 7 vient ici d'une part en appui indirectement contre le support 8 via une pièce additionnelle 33 qui est ici similaire à celle décrite en référence aux figures 1 à 5, et d'autre part en appui direct contre le flasque 11 formant la sortie de l'amortisseur d'oscillations de torsion à ressorts 4. Lorsque le flasque 11 est solidaire du moyeu de sortie 5 et que le support 8 du dispositif d'amortissement pendulaire 7 l'est également, c'est-à-dire en l'absence de pré-amortisseur, aucune rotation relative n'est possible entre le support 8 du dispositif d'amortissement pendulaire 7 et le flasque 11.

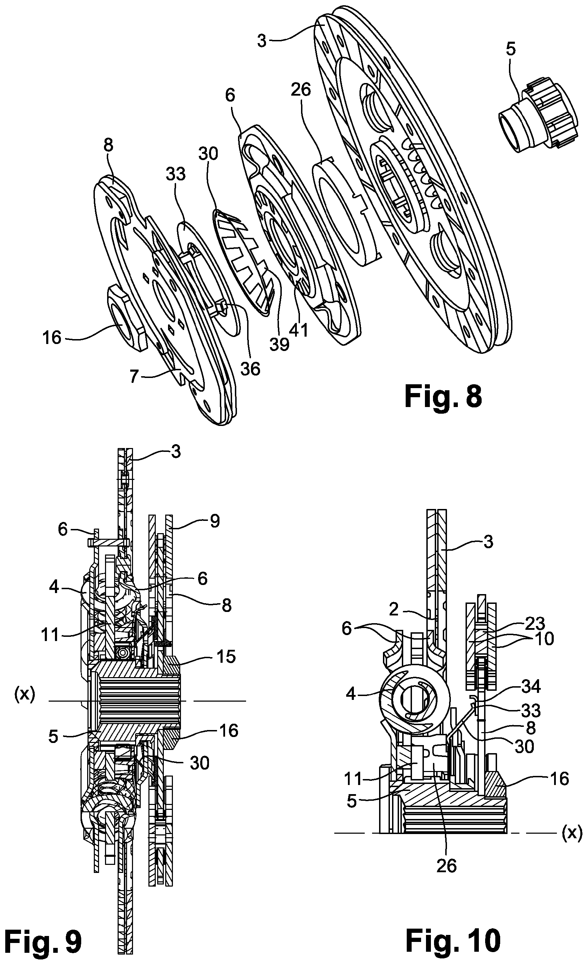

La rondelle 30 des figures 6 à 10 présente une structure similaire à celle des figures 1 à 5. On constate notamment sur la figure 8 que les pattes 39 passent au travers d'ouvertures 41 ménagées dans une des rondelles de guidage 6 formant l'entrée de l'amortisseur d'oscillations de torsion à ressorts 4. Ce passage s'effectue sans contact. Les pattes peuvent ensuite venir en appui contre l'élément 26.

Selon ce deuxième exemple de mise en œuvre de l'invention et en l'absence de pré-amortisseur, la rondelle 30 agit uniquement pour amortir les vibrations axiales du support 8 du dispositif d'amortissement, de par la contrainte axiale qu'elle exerce sur ce support.

L'invention n'est pas limitée aux exemples de mise en œuvre qui viennent d'être décrits.

Les figures 4 et 9 sont des vues à l'échelle, de sorte que des mesures peuvent être obtenues de ces dernières par l'homme du métier.

En particulier, on peut calculer:
- des ratios entre des dimensions axiales du dispositif d'amortissement pendulaire 7,
- des ratios entre des dimensions radiales du dispositif d'amortissement pendulaire 7,
- des ratios entre des dimensions du dispositif d'amortissement pendulaire 7 et tout autre partie du disque de friction 1.

## Revendications

1. Disque de friction pour embrayage (1) définissant un axe de rotation (X), et comprenant :
- un composant (6, 11) mobile en rotation autour de l'axe (X)
- un dispositif d'amortissement pendulaire (7), comprenant un support (8) et au moins un corps pendulaire (9) mobile par rapport à ce support (8), et
- un organe d'amortissement des vibrations axiales (30) du support (8) du dispositif d'amortissement pendulaire, venant en appui :
- d'une part au moins indirectement contre le support (8) du dispositif d'amortissement pendulaire (7), et
- d'autre part contre le composant (6, 11). le disque de friction étant en outre **caractérisé en ce que**:
le composant mobile en rotation est différent d'un composant supportant le dispositif d'amortissement pendulaire, et **en ce que** l'organe d'amortissement des vibrations axiales (30) du support (8) du dispositif d'amortissement pendulaire (7) vient en permanence en appui d'une part au moins indirectement contre le support (8) du dispositif d'amortissement pendulaire (7) et d'autre part contre le composant (6, 11) du disque de friction qui est mobile en rotation autour de l'axe (X).

2. Disque selon la revendication 1, comprenant un support (2) de garnitures de friction (3) et un moyeu de sortie.

3. Disque selon la revendication 2, le composant (6, 11) mobile en rotation autour de l'axe (X) étant solidaire du support (2) de garnitures ou du moyeu de sortie (5).

4. Disque selon la revendication 2 ou 3, le disque de friction (1) comprenant un amortisseur d'oscillations de torsion à ressorts (4), le support (2) de garnitures formant l'entrée de cet amortisseur d'oscillations de torsion (4) et le moyeu de sortie (5) formant la sortie de cet amortisseur d'oscillations de torsion (4).

5. Disque selon la revendication 4, le support (8) du dispositif d'amortissement pendulaire (7) étant solidaire du moyeu de sortie (5), l'organe d'amortissement des vibrations axiales (30) du support (2) venant en appui :
- d'une part au moins indirectement contre le support (8) du dispositif d'amortissement pendulaire (7), et
- d'autre part contre le composant (6) du disque de friction (1), ce dernier étant solidaire du support (2) de garnitures.

6. Disque selon la revendication 5, l'organe d'amortissement des vibrations axiales (30) du support étant une rondelle d'hystérésis (30) générant un frottement lors du mouvement de rotation relatif entre le support (8) du dispositif d'amortissement pendulaire (7) et le composant (6) du disque de friction qui est solidaire du support (2) de garnitures.

7. Disque selon la revendication 4, le support (8) du dispositif d'amortissement pendulaire (7) étant solidaire du moyeu de sortie (5), l'organe d'amortissement des vibrations axiales (30) du support (8) du dispositif d'amortissement pendulaire venant en appui :
- d'une part au moins indirectement contre le support (8) du dispositif d'amortissement pendulaire (7), et
- d'autre part contre le composant (11) du disque de friction, ce dernier étant solidaire du moyeu de sortie (5).

8. Disque selon l'une quelconque des revendications précédentes, l'organe d'amortissement des vibrations axiales (30) du support (8) du dispositif d'amortissement pendulaire venant en appui contre le support (8) du dispositif d'amortissement pendulaire via une pièce additionnelle (33) pincée entre cet organe d'amortissement des vibrations axiales (30) et le support (8) du dispositif d'amortissement pendulaire (7).

9. Disque selon la revendication 8, l'organe d'amortissement des vibrations axiales (30) du support (2) étant réalisé en une matière flexible et la pièce additionnelle étant réalisée en matière plastique.

10. Disque selon la revendication 8 ou 9, la pièce additionnelle (33) présentant une portion (34) en forme de collerette s'étendant axialement, et disposée radialement sous le corps pendulaire (9) afin de limiter le déplacement radialement vers l'intérieur de ce corps pendulaire (9).

11. Disque selon l'une quelconque des revendications précédentes, étant dépourvu de pré-amortisseur.

12. Disque selon l'une quelconque des revendications précédentes, l'action de l'organe d'amortissement des vibrations axiales (30) du support (8) du dispositif d'amortissement pendulaire (7) sur ce support (8) générant une surface d'appui sur ce support (8), et cette surface étant disposée à une distance de l'axe de rotation (X) du composant (6, 11) supérieure à 0,5 fois la distance entre cet axe de rotation (X) et le centre de gravité du corps pendulaire (9), lorsque ce dernier est au repos.

## Patentansprüche

1. Reibscheibe für eine Kupplung (1), die eine Drehachse (X) definiert, und beinhaltend:
- eine um die Achse (X) drehbare Komponente (6, 11),
- eine pendelartige Dämpfungsvorrichtung (7), die einen Träger (8) und mindestens einen Pendelkörper (9), der in Bezug auf diesen Träger (8) bewegbar ist, beinhaltet, und
- ein Organ zur Dämpfung der axialen Schwingungen (30) des Trägers (8) der pendelartigen Dämpfungsvorrichtung, das an Folgendem anliegt:
- einerseits mindestens indirekt an dem Träger (8) der pendelartigen Dämpfungsvorrichtung (7) und
- andererseits an der Komponente (6, 11),
wobei die Reibscheibe ferner **dadurch gekennzeichnet ist, dass**:
sich die drehbare Komponente von einer Komponente, die die pendelartige Dämpfungsvorrichtung trägt, unterscheidet und dass das Organ zur Dämpfung der axialen Schwingungen (30) des Trägers (8) der pendelartigen Dämpfungsvorrichtung (7) dauerhaft einerseits mindestens indirekt an dem Träger (8) der pendelartigen Dämpfungsvorrichtung (7) und andererseits an der Komponente (6, 11) der Reibscheibe, die um die Achse (X) drehbar ist, anliegt.

2. Scheibe nach Anspruch 1, beinhaltend einen Träger (2) von Reibbelägen (3) und eine Ausgangsnabe.

3. Scheibe nach Anspruch 2, wobei die Komponente (6, 11), die um die Achse (X) drehbar ist, fest an dem Träger (2) von Belägen oder an der Ausgangsnabe (5) befestigt ist.

4. Scheibe nach Anspruch 2 oder 3, wobei die Reibscheibe (1) einen Torsionsschwingungsdämpfer mit Federn (4) beinhaltet, wobei der Träger (2) von Belägen den Eingang dieses Torsionsschwingungsdämpfers (4) bildet und die Ausgangsnabe (5) den Ausgang dieses Torsionsschwingungsdämpfers (4) bildet.

5. Scheibe nach Anspruch 4, wobei der Träger (8) der pendelartigen Schwingungsvorrichtung (7) fest an der Ausgangsnabe (5) befestigt ist, wobei das Organ zur Dämpfung der axialen Schwingungen (30) des Trägers (2) an Folgendem anliegt:
- einerseits mindestens indirekt an dem Träger (8) der pendelartigen Dämpfungsvorrichtung (7) und
- andererseits an der Komponente (6) der Reibscheibe (1), wobei diese fest an dem Träger (2) von Belägen befestigt ist.

6. Scheibe nach Anspruch 5, wobei das Organ zur Dämpfung der axialen Schwingungen (30) des Trägers eine Hysteresescheibe (30) ist, die während der relativen Drehbewegung zwischen dem Träger (8) der pendelartigen Dämpfungsvorrichtung (7) und der Komponente (6) der Reibscheibe, die fest an dem Träger (2) von Belägen befestigt ist, eine Reibung erzeugt.

7. Scheibe nach Anspruch 4, wobei der Träger (8) der pendelartigen Schwingungsvorrichtung (7) fest an der Ausgangsnabe (5) befestigt ist, wobei das Organ zur Dämpfung der axialen Schwingungen (30) des Trägers (8) der pendelartigen Schwingungsvorrichtung an Folgendem anliegt:
- einerseits mindestens indirekt an dem Träger (8) der pendelartigen Dämpfungsvorrichtung (7) und
- andererseits an der Komponente (11) der Reibscheibe, wobei diese fest an der Ausgangsnabe (5) befestigt ist.

8. Scheibe nach einem der vorhergehenden Ansprüche, wobei das Organ zur Dämpfung der axialen Schwingungen (30) des Trägers (8) der pendelartigen Dämpfungsvorrichtung mittels eines zusätzlichen Teils (33), das zwischen diesem Organ zur Dämpfung der axialen Schwingungen (30) und dem Träger (8) der pendelartigen Dämpfungsvorrichtung (7) eingeklemmt ist, an dem Träger (8) der pendelartigen Dämpfungsvorrichtung anliegt.

9. Scheibe nach Anspruch 8, wobei das Organ zur Dämpfung der axialen Schwingungen (30) des Trägers (2) aus einem biegsamen Material hergestellt ist und das zusätzliche Teil aus einem Kunststoffmaterial hergestellt ist.

10. Scheibe nach Anspruch 8 oder 9, wobei das zusätzliche Teil (33) einen kragenförmigen Abschnitt (34) aufweist, der sich axial erstreckt und radial unter dem Pendelkörper (9) angeordnet ist, um die radiale Verschiebung dieses Pendelkörpers (9) nach innen hin zu begrenzen.

11. Scheibe nach einem der vorhergehenden Ansprüche, die nicht über einen Vordämpfer verfügt.

12. Scheibe nach einem der vorhergehenden Ansprüche, wobei das Einwirken des Organs zur Dämpfung der axialen Schwingungen (30) des Trägers (8) der pendelartigen Schwingungsvorrichtung (7) auf diesen Träger (8) eine Anlagefläche an diesem Träger (8) erzeugt und wobei diese Fläche in einem Abstand von der Drehachse (X) der Komponente (6, 11) angeordnet ist, der größer als das 0,5-fache des Abstands zwischen dieser Drehachse (X) und dem Schwerpunkt des Pendelkörpers (9) ist, wenn sich dieser in Ruhe befindet.

## Claims

1. Clutch friction disc (1) defining an axis of rotation (X) and comprising:
- a component (6, 11) that is rotatable about the axis (X),
- a pendulum damping device (7) comprising a support (8) and at least one pendulum body (9) that is movable with respect to said support (8), and
- a member (30) for damping axial vibrations of the support (8) of the pendulum damping device, bearing:
- for the one part, at least indirectly against the support (8) of the pendulum damping device (7), and,
- for the other part, against the component (6, 11), the friction disc moreover being **characterized in that**:
the rotatable component is different from a component supporting the pendulum damping device, and **in that** the member (30) for damping axial vibrations of the support (8) of the pendulum damping device (7) permanently bears, for the one part, at least indirectly against the support (8) of the pendulum damping device (7) and, for the other part, against the component (6, 11) of the friction disc that is rotatable about the axis (X) .

2. Disc according to Claim 1, which comprises a friction lining (3) support (2) and an output hub.

3. Disc according to Claim 2, wherein the component (6, 11) that is rotatable about the axis (X) is secured to the lining support (2) or to the output hub (5).

4. Disc according to Claim 2 or 3, wherein the friction disc (1) comprises a torsion oscillation damper (4) having springs, the lining support (2) forming the input of said torsion oscillation damper (4) and the output hub (5) forming the output of said torsion oscillation damper (4) .

5. Disc according to Claim 4, wherein the support (8) of the pendulum damping device (7) is secured to the output hub (5), the member (30) for damping axial vibrations of the support (2) bearing:
- for the one part, at least indirectly against the support (8) of the pendulum damping device (7), and,
- for the other part, against the component (6) of the friction disc (1), the latter being secured to the lining support (2).

6. Disc according to Claim 5, wherein the member (30) for damping axial vibrations of the support is a hysteresis washer (30) that generates friction during the relative rotational movement between the support (8) of the pendulum damping device (7) and the component (6) of the friction device that is secured to the lining support (2) .

7. Disc according to Claim 4, wherein the support (8) of the pendulum damping device (7) is secured to the output hub (5), the member (30) for damping axial vibrations of the support (8) of the pendulum damping device bearing:
- for the one part, at least indirectly against the support (8) of the pendulum damping device (7), and,
- for the other part, against the component (11) of the friction disc, the latter being secured to the output hub (5) .

8. Disc according to any one of the preceding claims, wherein the member (30) for damping axial vibrations of the support (8) of the pendulum damping device bears against the support (8) of the pendulum damping device via an additional part (33) clamped between said member (30) for damping axial vibrations and the support (8) of the pendulum damping device (7).

9. Disc according to Claim 8, wherein the member (30) for damping axial vibrations of the support (2) is made of a flexible material and the additional part is made of plastics material.

10. Disc according to Claim 8 or 9, wherein the additional part (33) has a portion (34) in the form of a flange that extends axially and is disposed radially beneath the pendulum body (9) so as to limit the radially inward movement of this pendulum body (9).

11. Disc according to any one of the preceding claims, which does not have a pre-damper.

12. Disc according to any one of the preceding claims, wherein the action of the member (30) for damping axial vibrations of the support (8) of the pendulum damping device (7) on this support (8) creates a bearing surface on said support (8), and said surface is disposed at a distance from the axis of rotation (X) of the component (6, 11) that is greater than 0.5 times the distance between said axis of rotation (X) and the centre of gravity of the pendulum body (9), when the latter is at rest.
